# EUROPÄISCHE PATENTSCHRIFT

(11) **EP 2 210 009 B1**
(45) Veröffentlichungstag und Bekanntmachung des Hinweises auf die Patenterteilung: **14.12.2011**
(21) Anmeldenummer: 08802816.2
(22) Anmeldetag: 08.10.2008
(51) Int. Cl.: F16D 55/22

(54) **HYDRAULISCH BETÄTIGTE MEHRKOLBEN-SCHEIBENBREMSE**
HYDRAULICALLY ACTUATED MULTI-PISTON DISC BRAKE
FREIN À DISQUE À PLUSIEURS PISTONS À COMMANDE HYDRAULIQUE

(30) Priorität: 09.10.2007 DE 102007048350
(43) Veröffentlichungstag der Anmeldung: 28.07.2010
(73) Patentinhaber: KNORR-BREMSE Systeme für Nutzfahrzeuge GmbH, 80809 München (DE)
(72) Erfinder: PERICEVIC, Aleksandar, 80636 München (DE); BAUMGARTNER, Johann, 85368 Moosburg (DE); TRIMPE, Robert, 82234 Wessling (DE); GEISSLER, Steffen, 63110 Rodgau (DE)
(74) Vertreter: Mattusch, Gundula
(86) Internationale Anmeldenummer: PCT/EP2008/008471
(87) Internationale Veröffentlichungsnummer: WO 2009/049802

(56) Entgegenhaltungen:
- JP-A- 10 196 692
- US-A- 3 456 766
- US-A- 5 386 890
- US-B1- 6 761 251

## Beschreibung

Die Erfindung betrifft eine hydraulisch betätigte Scheibenbremse mit zumindest zwei auf einen Bremsbelag einwirkenden Bremskolben, nach dem Oberbegriff des Anspruchs 1.

Auch bei Scheibenbremsen mit zwei Bremskolben oder mehr kann Schrägverschleiß bzw. Umfangsschrägverschleiß von Bremsbelägen auftreten, der ein die Lebensdauer der Bremsbeläge begrenzendes Kriterium darstellt. Druckluftbetätigte Scheibenbremsen mit zwei Bremskolben sind mit einer mechanischen Synchronisation einer Nachstellbewegung der beiden Bremskolben, die auch als Betätigungsstempel bezeichnet werden, ausgerüstet. Durch eine solche Maßnahme kann die Lebensdauer der Bremsbeläge um bis zu 25% gesteigert werden.

Es sind weitere Maßnahmen zur Vermeidung von Schrägverschleiß bei pneumatisch zugespannten Scheibenbremsen bekannt, wie zum Beispiel eine versetzte Spannkrafteinleitung; ein gezogener Bremsbelag, der jedoch den Nachteil mit sich bringt, dass bei einem Belagwechsel der Bremssattel demontiert werden muss, was für Nutzfahrzeuge nicht zur Anwendung kommen sollte; und eine so genannte eingehängte Druckplatte.

Alle diese Lösungsansätze beziehen sich jedoch auf mit Druckluft betätigte Scheibenbremsen. Für hydraulisch betätigte Scheibenbremsen mit Mehrkolbenbetätigung ist keine Schrägverschleißminderung mittels synchronisierter Nachstellbewegung der Betätigungs- bzw. Bremskolben bekannt. Insbesondere bei Nutzfahrzeug-Scheibenbremsen mit hydraulischer Betätigung ist der auftretende Schrägverschleiß ein Lebensdauerkriterium.

Die DE 102005049786 Al beschreibt eine selbstverstärkende Scheibenbremse, bei welcher ein Stufenkolben zur Variation von Keilwinkeln zwei Betätigungskolben mit Druck beaufschlagt. Die Stufenquerschnitte des Stufenkolbens sind so bemessen, dass sie in Zusammenhang mit Schalteinrichtungen bei Verschiebung des Stufenkolbens unterschiedliche Verschiebungen der Betätigungskolben erzeugen.

Die JP 10 196692 A beschreibt eine Scheibenbremse mit vier Bremskolben, von denen sich jeweils zwei gegenüberstehen. Die Druckkammern jeweils zweier nebeneinander liegender Bremskolben kommunizieren über ein Durchgangsloch. Parallel zu dem Durchgangsloch sind ein Rückschlagventil und ein Restdrucklöseventil angeordnet. Die hydraulische Synchronisationseinrichtung bedarf aber noch der konstruktiven und funktionalen Optimierung.

Die Aufgabe der vorliegenden Erfindung besteht daher darin, eine hydraulisch betätigte Mehrkolben-Scheibenbremse so zu verbessern, dass der Effekt des Schrägverschleißes gering gehalten wird.

Die Aufgabe wird mit dem Gegenstand mit den Merkmalen des Anspruchs 1 gelöst.

Danach sind keine mechanischen beweglichen Komponenten wie zum Beispiel Stellschrauben und zugehörige Getriebe notwendig. Die hydraulische Synchronisationsvorrichtung ist daher mit nur einer geringen Zahl an Bauteilen versehen, zum Beispiel einem Stufenkolben, welcher in dem Bremsengehäuse zwischen den Bremskolben eingebracht ist.

Da die hydraulische Synchronisationsvorrichtung zumindest teilweise in dem Bremsengehäuse eingebracht ist, wird eine Platzersparnis erzielt.

Die hydraulische Synchronisationsvorrichtung ist mit einem Stufenkolben ausgebildet, der Folgendes aufweist: zumindest eine erste mit einem Eingangsdruck zur Bremsbetätigung beaufschlagbare Kolbenfläche, die in einem Eingangsdruckraum bewegbar angeordnet ist; und zumindest zwei Kolbenflächen zur jeweiligen Erzeugung eines Betätigungsdruckes für die zumindest zwei Bremskolben, die jeweils in einem korrespondierenden Ausgangsdruckraum bewegbar angeordnet sind. Dabei ist der Stufenkolben zwischen den beiden Bremskolben in dem Bremsengehäuse so angeordnet, dass zur Erzielung kurzer Leitungswege, das heißt zur Verringerung von Strömungswiderständen, die mit den Betätigungszylindern bzw. Druckräumen der Bremskolben verbundenen Ausgangsdruckräume der Synchronisationsvorrichtung den ersteren zugewandt sind. Der vom Hauptbremszylinder der Bremsanlage gelieferte Eingangsdruck bei einer Bremsbetätigung wirkt auf die erste Kolbenfläche des Stufenkolbens ein, welcher daraufhin mit seiner zweiten und dritten Kolbenfläche Drücke für den jeweiligen Bremskolben erzeugt.

Bei einem ungleichmäßig verschlissenen Bremsbelag beginnt an dem Bremskolben, welcher zur dickeren Seite des Bremsbelags gehört, der Kraftaufbau früher als an dem Bremskolben, der zur dünneren Seite des Bremsbelags gehört, und damit auch der Druckanstieg im zugeordneten Druckraum früher als an dem anderen, welcher der dünneren Seite des Bremsbelags zugeordnet ist. Bei der weiteren Betätigung bilden sich in den beiden Druckräumen infolge der synchronen Betätigung des Stufenkolbens unterschiedliche Drücke aus, wodurch die Betätigungskraft des Kolbens auf der dünneren Seite des Bremsbelags verringert und die des Kolbens auf der dickeren Seite erhöht wird. Auf diese Weise wird der Verschleiß innerhalb des Bremsbelags homogenisiert. Diese Ungleichverteilung der Kolbenkraft wächst solange an, bis keine weitere Zunahme des Ungleichverschleißes mehr eintritt.

Um eine Verschleißnachstellung bzw. Lüftspieleinstellung nach Bremsenservice, eine Rückstellbarkeit der Kolben zum Bremsenservice, eine Füllbarkeit der Bremsanlage bei Erstmontage und Bremsenservice sowie einen so genannten weichen "Knock-Back" zur Vermeidung von DTV zu erhalten, welches alle notwendige Funktionen sind, ist es in einer Ausführung vorteilhaft, dass die Ausgangsdruckräume mit dem Eingangsdruckraum verbunden sind.

In einer weiteren Ausführung sind in einer Ruhestellung des Stufenkolbens die Ausgangsdruckräume untereinander und zumindest ein Ausgangsdruckraum mit dem Eingangsdruckraum verbunden.

Besonders bevorzugt sind die Ausgangsdruckräume mit dem Eingangsdruckraum über steuerbare Verbindungen verbunden, wobei die steuerbaren Verbindungen zumindest ein Ventil aufweisen. Dieses Ventil kann ein druckgeschaltetes Ventil, zum Beispiel durch den Eingangsdruck geschaltet, sein.

Besonders bevorzugt ist das Ventil ein fremdgeschaltetes Ventil. Dies kann zum Beispiel durch einen Elektromagnet betätigbar sein. Dadurch werden in einfacher Weise eine dauerhafte Synchronisation, eine geeignete Verschleißnachstellung, eine Möglichkeit zur Kolbenrückstellung beim Bremsenservice, eine Möglichkeit zur Befüllung der Bremsanlage mit Hydraulikflüssigkeit und ein weicher "Knock-Back" realisiert.

Die Erfindung wird nun anhand von Ausführungsbeispielen mit Bezug auf die beigefügten Zeichnungen näher erläutert. Hierbei zeigt:
- Fig. 1: eine schematische Schnittansicht einer erfindungsgemäßen hydraulisch betätigten Mehrkolben-Scheibenbremse mit einer Synchronisationsvorrichtung;
- Fig. 2: eine schematische Darstellung einer Synchronisationsvorrichtung eines zweiten Ausführungsbeispiels der erfindungsgemäßen hydraulisch betätigten Mehrkolben-Scheibenbremse;
- Fig. 3: eine schematische Darstellung einer Synchronisationsvorrichtung eines dritten Ausführungsbeispiels der erfindungsgemäßen hydraulisch betätigten Mehrkolben-Scheibenbremse;
- Fig. 4: eine schematische Darstellung einer Synchronisationsvorrichtung eines vierten Ausführungsbeispiels der erfindungsgemäßen hydraulisch betätigten Mehrkolben-Scheibenbremse; und
- Fig. 5: eine schematische vergrößerte Darstellung der Synchronisationsvorrichtung des ersten Ausführungsbeispiels der erfindungsgemäßen hydraulisch betätigten Mehrkolben-Scheibenbremse nach Fig. 1.

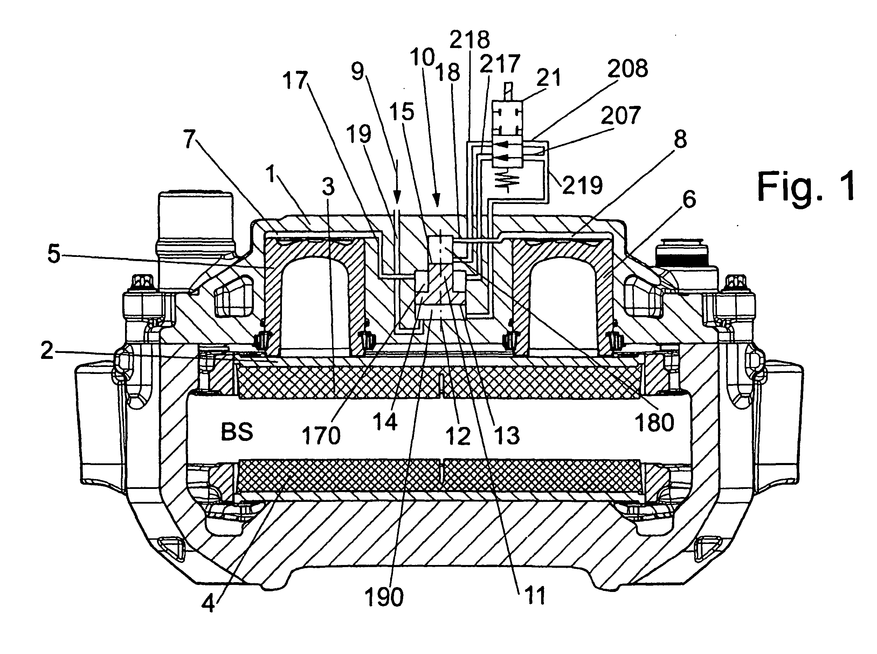

Fig. 1 zeigt eine schematische Schnittansicht eines ersten Ausführungsbeispiels einer erfindungsgemäßen hydraulisch betätigten Scheibenbremse, die zwei Bremskolben 5, 6 und eine diesen vorgeschaltete Synchronisationsvorrichtung 10 aufweist.

Die Bremskolben 5, 6 sind in einem Bremsengehäuse/-sattel 1 in jeweiligen Zylindern mit Druckräumen 7 und 8 angeordnet. An ihrer in der Fig. 1 gezeigten Unterseite ist ein Bremsbelagträger 2 mit Bremsbelag 3 angeordnet, dem ein reaktionsseitiger Bremsbelag 4 - ggf. mit entsprechendem Träger im Bremsengehäuse 1 - gehalten gegenüberliegt. Zwischen den Bremsbelägen ist ein Bremsscheibenraum BS vom Bremsengehäuse 1 umgeben angeordnet, der für eine Bremsscheibe (hier nicht gezeigt) vorgesehen ist, wie leicht vorstellbar ist.

Die Synchronisationsvorrichtung 10 ist in diesem Beispiel in dem Bremsengehäuse 1 zwischen den Bremskolbenzylindern angeordnet, wodurch kurze Leitungswege zwischen den einzelnen Druckräumen erzielt werden.

Die Synchronisationsvorrichtung 10 weist in diesem ersten Beispiel einen Stufenkolben 11 auf, welcher mit einem unteren breiten Abschnitt, einer Eingangsstufe 12, in einem Raum in Längsrichtung des Stufenkolbens 11 verschiebbar angeordnet ist. Dieser Raum wird von der Eingangsstufe 12 in zwei veränderliche Druckräume aufgeteilt. Der untere Raum ist ein Eingangsdruckraum 190, welcher mit einer Eingangsdruckleitung 19 verbunden ist, die zum Beispiel mit einem Hauptbremszylinder (nicht gezeigt) der Bremsanlage verbunden ist. Die Unterseite der Eingangsstufe 12 des Stufenkolbens 11 weist eine erste Kolbenfläche 13 auf. Die der Unterseite gegenüberliegende Seite ist mit einer zweiten Kolbenfläche 14 dem oberen Druckraum des oben genannten Raumes zugewandt. Dieser obere Druckraumabschnitt bildet hier einen ersten Ausgangsdruckraum 170, welcher über eine erste Ausgangsdruckleitung 17 mit dem ersten Druckraum 7 des Zylinders des ersten Bremskolbens 5 verbunden ist.

Die Eingangsstufe 12 des Stufenkolbens 11 ist mit einem oberen, schmaleren Abschnitt verbunden, welcher sich in einen zweiten Ausgangsdruckraum 180 erstreckt und eine obere Seite mit einer dritten Kolbenfläche 15 aufweist. Der zweite Ausgangsdruckraum 180 ist über eine zweite Ausgangsdruckleitung 18 mit dem zweiten Druckraum 8 des Zylinders des ersten Bremskolbens 6 verbunden.

Die Funktion der Synchronisationsvorrichtung ist wie folgt.

Der in diesem Beispiel vom Hauptbremszylinder gelieferte Eingangsdruck 9 wirkt im Eingangsdruckraum 190 über die Eingangsdruckleitung 19 auf die erste Kolbenfläche 13 des Stufenkolbens 11. Die zweite und dritte Kolbenfläche 14 und 15 des Stufenkolbens 11 erzeugen daraufhin Ausgangsdrücke in den jeweiligen Ausgangsdruckräumen 170 und 180, welche über die jeweiligen Ausgangsdruckleitungen 17 und 18 den zugehörigen Druckräumen 7 und 8 der Bremskolben 5 und 6 zugeleitet werden.

Wenn, wie bei ebenen und gleichmäßig verschlissenen Bremsbelägen 3, 4 der Fall, sich an beiden Bremskolben 5, 6 die gleiche Kraft-Hub-Charakteristik einstellt, sind die Ausgangsdrücke für die Bremskolben 5, 6 gleich groß und entsprechen dem Eingangsdruck 9. Im Falle eines infolge Umfangsschrägverschleißes ungleich dicken Bremsbelages 3 beginnt an dem Bremskolben 5, 6, welcher an der dickeren Seite des Bremsbelages 3 angeordnet ist, der Kraftaufbau und damit auch der Druckanstieg in dem zugeordneten Druckraum 7, 8 früher als an dem anderen Bremskolben 5, 6, der am dünneren Ende des Bremsbelages 3 angeordnet ist.

Bei weiterer Bremsbetätigung bilden sich in den Druckräumen 7, 8 der Zylinder der Bremskolben 5, 6 infolge der synchronen Betätigung durch den Stufenkolben 11 unterschiedliche Drücke aus. Es wird die Betätigungskraft des Bremskolbens 5, 6 auf der dünneren Seite des Bremsbelages 3 verringert, und die Betätigungskraft des Bremskolbens 5, 6 auf der dickeren Seite des Bremsbelages 3 wird im gleichen Maße erhöht. Auf diese Weise wird der Verschleiß innerhalb des Bremsbelages 3 homogenisiert. Die Ungleichverteilung der Kolbenkraft wächst solange an, bis keine weitere Zunahme des Ungleichverschleißes mehr eintritt. Diese gilt in entsprechender Weise auch für den gegenüberliegenden Bremsbelag 4.

Die beschriebenen Effekte setzen voraus, dass die Druckräume 190, 170 und 180 hermetisch von einander getrennt sind.

Eine ständige hermetische Trennung könnte andere Funktionen beeinträchtigen, als das wären:
1) Verschleißnachstellung bzw. Lüftspieleinstellung nach Bremsenservice
2) Rückstellbarkeit der Bremskolben zum Bremsenservice
3) Füllbarkeit der Bremsanlage bei Erstmontage und Bremsenservice
4) Weicher "Knock-Back" zur Vermeidung von DTV

Neben der Erfüllung dieser notwendigen Funktionen besteht die Forderung, dass eine Störung oder Fehlfunktion der Synchronisationsvorrichtung 10 die Funktion der Bremse nicht beeinträchtigen darf.

Aus diesem Grund ist weiterhin in diesem besonders bevorzugten ersten Ausführungsbeispiel der Eingangsdruckraum 190 durch eine Eingangsausgleichleitung 219, die ein eine erste und zweite Ausgleichleitung 207, 208 verzweigt, über ein erstes, fremdgesteuertes Ventil 21 jeweils mit dem ersten Ausgangsdruckraum 170 über eine erste Ausgangsausgleichleitung 217 und mit dem zweiten Ausgangsdruckraum 180 über eine zweite Ausgangsausgleichleitung 218 verbunden.

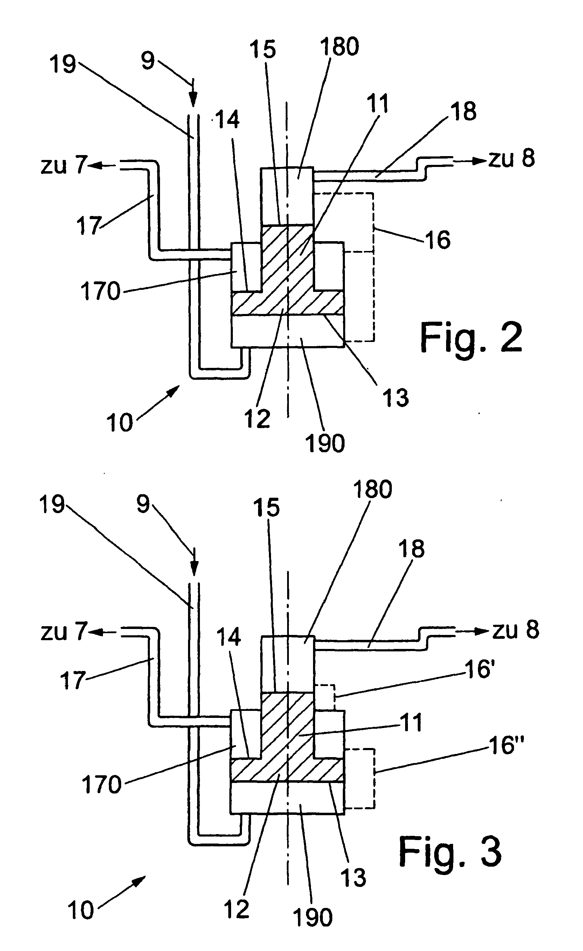

Die Figuren 2 bis 4 zeigen Synchronisationsvorrichtungen weiterer Ausführungsbeispiele der erfindungsgemäßen hydraulisch betätigten Mehrkolben-Scheibenbremse.

Fig. 2 zeigt eine schematische Darstellung eines zweiten Ausführungsbeispiels der erfindungsgemäßen hydraulisch betätigten Mehrkolben-Scheibenbremse. Hierbei sind die Ausgangsdruckräume 170 und 180 zusammen mit dem Eingangsdruckraum 190 über eine so genannte Leckageleitung 16 verbunden. Diese ständige Leckage stellt eine einfache Maßnahme dar und hält die Funktionsfähigkeit aufrecht.

Fig. 3 zeigt eine schematische Darstellung eines dritten Ausführungsbeispiels der erfindungsgemäßen hydraulisch betätigten Mehrkolben-Scheibenbremse, wobei eine Leckage nur in Ruhestellung des Stufenkolbens 11 erfolgt. Dazu ist eine Leckageleitung 16' mit dem unteren Abschnitt des Ausgangsdruckraums 180, der in der gezeigten Ruhestellung des Stufenkolbens 11 nicht abgedichtet ist, und dem Ausgangsdruckraum 170 verbunden. Der untere Abschnitt des Eingangsdruckraums 190 ist hier mit dem unteren Abschnitt des Ausgangsdruckraums 170 über eine weitere Leckageleitung 16" verbunden. Dieses ist ebenfalls eine relativ einfache Maßnahme, wobei der Synchronisationseffekt reduziert wird.

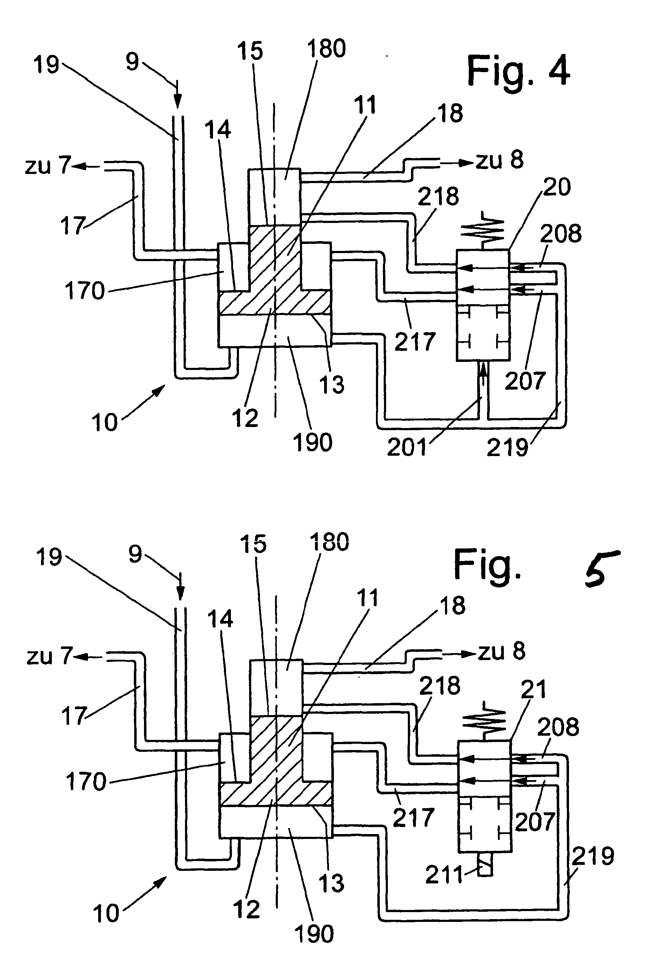

Fig. 4 zeigt eine schematische Darstellung eines vierten Ausführungsbeispiels der erfindungsgemäßen hydraulisch betätigten Mehrkolben-Scheibenbremse mit druckgeschaltetem Ventil 20. Der Eingangsdruckraum 190 ist über die Eingangsausgleichleitung 219, die sich in eine erste und zweite Ausgleichleitung 207 und 208 verzweigt, mit dem Ventil 20 verbunden, das weitere Ausgangsanschlüsse über eine erste und zweite Ausgangsausgleichleitung 217 und 218 jeweils zum ersten und zweiten Ausgangsdruckraum 170, 180 aufweist. Von der Eingangsausgleichleitung 219 zweigt eine Steuerdruckleitung 201 zur Steuerung des druckgesteuerten Ventils 20 ab. Das Ventil 20 muss gegen die Strömungsrichtung offen gehalten werden, um die oben genannten Funktionen zu erfüllen.

Als besonders bevorzugte Lösung zeigt Fig. 5, wie schon oben beschrieben, die Synchronisationsvorrichtung des ersten Ausführungsbeispiels in vergrößerter Darstellung. Das Ventil 21 ist fremdgesteuert ausgeführt, was zum Beispiel mittels eines Elektromagneten realisiert ist. Dieses Ventil 21 wird frei durchströmt, alle oben genannten Funktionen werden vollständig erfüllt. Das Ventil 21 muss vor Druckaufbau geschaltet werden, was durch eine entsprechende Steuereinrichtung erfolgen kann, die dazu zum Beispiel mit dem Bremspedal als Auslösekontakt gekoppelt ist.

In dem ersten Ausführungsbeispiel nach Fig. 1 bzw. Fig. 5 ist in bevorzugter Ausführung vorgesehen, dass die Druckräume 190, 170 und 180 über das Ventil 21 steuerbar verbunden sind, wodurch zur Erfüllung der oben geforderten Funktionen ein Ausgleich geschaffen wird.

Nachfolgend werden weitere Vorteile der Erfindung beschrieben:

### 1) Verschleißnachstellung bzw. Lüftspieleinstellung

Zu betrachten ist der Fall: Zustand nach Bremsbelagwechsel. Bremskolben 5, 6 sind bis zum Anschlag zurückgeschoben: großer Spalt (>1 mm) zwischen Bremskolben 5, 6 und Bremsbelagträger 2. Bei Betätigung der Bremse in diesem Zustand werden die Bremsbelagträger 2 mit den Bremsbelägen 3 um den Betrag des Spaltes + Elastizitätshub verschoben. Beim Lösen jedoch durch den "Roll-Back-Effekt" nur um den Betrag des Lüftspiels von max. 0,5mm zurückgezogen. Es verbleibt mehr Volumen in den Betätigungszylindern bzw. Druckräumen 7, 8, und entsprechend diesem Volumen wird der Stufenkolben 11 weniger zurückgeschoben. Der Stufenkolben 11 wird seine Ausgangsposition nicht mehr erreichen, sondern bei mehr als 1/3 seines Hubes stehen bleiben.

Mögliche eine Abhilfe bringende Maßnahmen sind (siehe Fig. 2 bis 5)
a) Eine ständige Leckage zwischen den drei Druckräumen 170, 180, 190, welche derart bemessen wird, dass sie die Funktion sicher aufrecht erhält;
b) Eine Leckage nur in der Ruheposition des Stufenkolbens 11;
c) Eine Bypass-Schaltung mit druckgeschalteten Ventilen
d) Eine Bypass-Schaltung mit fremdgeschalteten Ventilen

### 2) Rückstellung der Bremskolben beim Bremsenservice

Die Rückstellung der Bremskolben 5, 6 erfolgt durch Zurückschieben derselben gegen den Widerstand von Kolbendichtringen. Voraussetzung ist, dass die Rückströmung des verdrängten Bremsfluids in ein Reservoir der Bremsanlage ungehindert erfolgen kann.

Der Stufenkolben 11 stellt ohne entsprechende Maßnahmen eine Rückströmsperre dar, durch welche das Zurückstellen der Kolben verhindert wird.
3) Füllung der Bremsanlage
4) Weicher "Knock-Back"

Die Leitungen 17, 18, 19, 217, 218, 219 verlaufen vorzugsweise innerhalb des Bremsengehäuses 1, wobei auch das Ventil 21 in das Bremsengehäuse 1 eingebaut sein kann. Das Ventil 21 ist aus Gründen der Einfachheit als genormtes Schaltzeichen dargestellt.

Die Erfindung ist nicht auf die oben beschriebenen beispielhaften Ausführungen beschränkt.

Es ist denkbar, dass der Stufenkolben 11 auch für mehr als zwei Bremskolben 5, 6 mehrstufig ausgeführt ist.

Die Synchronisationsvorrichtung 10 kann auch separat auf dem Bremsengehäuse 1 angeordnet sein.

### Bezugszeichenliste

- 1: Bremsengehäuse
- 2: Bremsbelagträger
- 3: Bremsbelag
- 4: Bremsbelag
- 5: Erster Bremskolben
- 6: Zweiter Bremskolben
- 7: Erster Druckraum
- 8: Zweiter Druckraum
- 9: Eingangsdruck
- 10: Synchronisationsvorrichtung
- 11: Stufenkolben
- 12: Eingangsstufe
- 13: Erste Kolbenfläche
- 14: Zweite Kolbenfläche
- 15: Dritte Kolbenfläche
- 16, 16', 16": Leckageleitung
- 17: Erste Ausgangsdruckleitung
- 18: Zweite Ausgangsdruckleitung
- 19: Eingangsdruckleitung
- 20: Erstes Ventil
- 21: Zweites Ventil
- 170: Erster Ausgangsdruckraum
- 180: Zweiter Ausgangsdruckraum
- 190: Eingangsdruckraum
- 201: Steuerdruckleitung
- 207: Erste Ausgleichleitung
- 208: Zweite Ausgleichleitung
- 217: Erste Ausgangsausgleichleitung
- 218: Zweite Ausgangsausgleichleitung
- 219: Eingangsausgleichleitung
- BS: Bremsscheibenraum

## Patentansprüche

1. Hydraulisch betätigte Scheibenbremse mit zumindest zwei auf einen Bremsbelag (3) einwirkenden Bremskolben (5, 6), welche in einem Bremsengehäuse (1) angeordnet sind, wobei eine hydraulische Synchronisationsvorrichtung (10) zur Schrägverschleißminderung des Bremsbelags (3), welche zwischen eine Eingangsdruckleitung (19) zur Bremsbetätigung und die Bremskolben geschaltet ist, zumindest teilweise in dem Bremsengehäuse (1) eingebracht ist, **dadurch gekennzeichnet, dass** die hydraulische Synchronisationsvorrichtung (10) mit einem Stufenkolben (11) ausgebildet ist, der Folgendes aufweist:
- zumindest eine erste mit einem Eingangsdruck (19) zur Bremsbetätigung beaufschlagbaren Kolbenfläche (13), die in einem Eingangsdruckraum (190) bewegbar angeordnet ist; und
- zumindest zwei Kolbenflächen (14, 15) zur jeweiligen Erzeugung eines Betätigungsdruckes für die zumindest zwei Bremskolben (5, 6), die jeweils in einem korrespondierenden Ausgangsdruckraum (170, 180) bewegbar angeordnet sind.

2. Hydraulisch betätigte Scheibenbremse nach Anspruch 1, **dadurch gekennzeichnet, dass** die Ausgangsdruckräume (170, 180) mit dem Eingangsdruckraum (190) verbunden sind.

3. Hydraulisch betätigte Scheibenbremse nach Anspruch 1, **dadurch gekennzeichnet, dass** in einer Ruhestellung des Stufenkolbens (11) die Ausgangsdruckräume (170, 180) untereinander und zumindest ein Ausgangsdruckraum (170) mit dem Eingangsdruckraum (190) verbunden sind.

4. Hydraulisch betätigte Scheibenbremse nach Anspruch 1, **dadurch gekennzeichnet, dass** die Ausgangsdruckräume (170, 180) mit dem Eingangsdruckraum (190) über steuerbare Verbindungen verbunden sind.

5. Hydraulisch betätigte Scheibenbremse nach Anspruch 4, **dadurch gekennzeichnet, dass** die steuerbaren Verbindungen zumindest ein Ventil (20, 21) aufweisen.

6. Hydraulisch betätigte Scheibenbremse nach Anspruch 5, **dadurch gekennzeichnet, dass** das Ventil (20) ein druckgeschaltetes Ventil (20) ist.

7. Hydraulisch betätigte Scheibenbremse nach Anspruch 6, **dadurch gekennzeichnet, dass** das druckgeschaltete Ventil (20) von dem Eingangsdruck (9) schaltbar ist.

8. Hydraulisch betätigte Scheibenbremse nach Anspruch 5, **dadurch gekennzeichnet, dass** das Ventil (20) ein fremdgeschaltetes Ventil (20) ist.

## Claims

1. A hydraulically actuated disk brake comprising at least two brake pistons (5, 6) acting upon a brake lining (3), which are arranged in a brake housing (1), wherein a hydraulic synchronisation device (10) for reducing oblique wear of the brake lining (3), which is interposed between an inlet pressure line (19) for brake actuation and the brake pistons, is incorporated at least partially in the brake housing (1), **characterised in that** the hydraulic synchronisation device (10) is designed with a stepped piston (11), which comprises the following:
- at least a first piston face (13), which can be subjected to an inlet pressure (19) for brake actuation and which is moveably arranged in an inlet pressure chamber (190); and
- at least two piston faces (14, 15) for generating an actuating pressure for each of the at least two brake pistons (5, 6) which are moveably arranged in a corresponding outlet pressure chamber (170, 180).

2. The hydraulically actuated disk brake as claimed in claim 1, **characterised in that** the outlet pressure chambers (170, 180) are connected to the inlet pressure chamber (190).

3. The hydraulically actuated disk brake as claimed in claim 1, **characterised in that** in a resting position of the stepped piston (11), the outlet pressure chambers (170, 180) are interconnected and at least one outlet pressure chamber (170) is connected to the inlet pressure chamber (190).

4. The hydraulically actuated disk brake as claimed in claim 1, **characterised in that** the outlet pressure chambers (170, 180) are connected to the inlet pressure chamber (190) by controllable connections.

5. The hydraulically actuated disk brake as claimed in claim 4, **characterised in that** the controllable connections comprise at least one valve (20, 21).

6. The hydraulically actuated disc brake as claimed in claim 5, **characterised in that** the valve (20) is a pressure-controlled valve (20).

7. The hydraulically actuated disc brake as claimed in claim 6, **characterised in that** the pressure-controlled valve (20) can be controlled by the inlet pressure (9).

8. The hydraulically actuated disc brake as claimed in claim 5, **characterised in that** the valve is a remotely controlled valve (20).

## Revendications

1. Frein à disque à commande hydraulique à au moins deux pistons de frein (5, 6) agissant sur une garniture de frein (3), qui sont disposés dans un carter de frein (1), à un dispositif de synchronisation hydraulique (10) pour la réduction de l'usure oblique de ladite garniture de frein (3), qui est inséré entre une conduite de pression d'entrée (19) pour l'opération du frein et lesdits pistons de frein, étant monté, au moins en partie, à l'intérieur dudit carter de frein (1), **caractérisé en ce que** ledit dispositif de synchronisation hydraulique (10) est muni d'un piston à gradins comprenant les éléments suivants :
- au moins une première aire de piston (13) apte à être soumise à une pression d'entrée (19) pour la commande du frein, laquelle aire est disposée de façon mobile dans un espace de pression d'entrée (190) ; et
- au moins deux aires de piston (14, 15) pour la génération respective d'une pression d'opération pour les au moins deux pistons de frein (5, 6), qui sont disposés de façon mobile dans un espace respective de pression de sortie correspondant (170, 180).

2. Frein à disque à commande hydraulique selon la revendication 1, **caractérisé en ce que** lesdits espaces de pression de sortie (170, 180) sont reliés audit espace de pression d'entrée (190).

3. Frein à disque à commande hydraulique selon la revendication 1, **caractérisé en ce qu'**en une position de repos dudit piston à gradins (11), lesdits espace de pression de sortie (170, 180) sont reliés l'un à l'autre et au moins un espace de pression de sortie (170) est relié audit espace de pression d'entrée (190).

4. Frein à disque à commande hydraulique selon la revendication 1, **caractérisé en ce que** lesdits espaces de pression de sortie (170, 180) sont reliés audit espace de pression d'entrée (190) via des connexions commandables.

5. Frein à disque à commande hydraulique selon la revendication 4, **caractérisé en ce que** lesdits connexions commandables comprennent au moins une soupape (20, 21).

6. Frein à disque à commande hydraulique selon la revendication 5, **caractérisé en ce que** ladite soupape (20) est une soupape commutée par pression (20).

7. Frein à disque à commande hydraulique selon la revendication 6, **caractérisé en ce que** ladite soupape commutée par pression (20) est commutable par ladite pression d'entrée (9).

8. Frein à disque à commande hydraulique selon la revendication 5, **caractérisé en ce que** ladite soupape (20) est une soupape à commutation du dehors.
